Europäisches Patentamt

European Patent Office

Office européen des brevets

(19)

(11) Veröffentlichungsnummer: **0 314 881**
**B1**

(12) **EUROPÄISCHE PATENTSCHRIFT**

(45) Veröffentlichungstag der Patentschrift:
18.04.90

(21) Anmeldenummer: 88111897.0

(22) Anmeldetag: 23.07.88

(51) Int. Cl.⁴: **B65G 47/53**, B65G 47/82

(54) **Aussortiervorrichtung für Stückgüter.**

(30) Priorität: 05.11.87 DE 3737543

(43) Veröffentlichungstag der Anmeldung:
10.05.89 Patentblatt 89/19

(45) Bekanntmachung des Hinweises auf die Patenterteilung:
18.04.90 Patentblatt 90/16

(84) Benannte Vertragsstaaten:
AT BE CH ES FR GB GR IT LI LU NL SE

(56) Entgegenhaltungen:
US-A- 3 006 457
US-A- 4 298 117

(73) Patentinhaber: L. & C. ARNOLD GMBH, Karlstrasse 24,
D-7060 Schorndorf(DE)

(72) Erfinder: Schlabbers, Günther, Utrechterstrasse 22,
D-4170 Geldern 1(DE)

(74) Vertreter: Beyer, Rudi, Patentanwalt Dipl.-Ing. Rudi
Beyer Am Dickelsbach 8, D-4030 Ratingen 6 (Hösel)(DE)

## Beschreibung

Die Erfindung betrifft eine Aussortiervorrichtung mit wenigstens einem motorisch angetriebenen Hauptförderer, auf dem Stückgüter herangefördert werden, wobei dem Hauptförderer mindestens ein motorisch antreibbarer Abzugs- oder Querförderer zugeordnet ist, der das mittels eines motorisch betätigbaren Schwenkabschiebers aussortierte Stückgut wegfördert, wobei der Schwenkabschieber aus einem Schwenkarm und einem Abschiebearm besteht, und diese Arme in Richtung der Schwenkachse des Schwenkabschiebers gesehen in einem Winkel – vorzugsweise einem spitzen Winkel – zueinander ausgerichtet und in Richtung der Schwenkachse beabstandet und in unterschiedlichen Ebenen angeordnet und einstückig starr miteinander verbunden sind, und die Schwenkachse am freien Ende des Schwenkarmes angeordnet ist, wobei in der Ruhestellung der Abschiebearm annähernd parallel zur Förderrichtung des Hauptförderers in Höhe der Stückgüter außerhalb des Transportbereichs der Stückgüter auf dem Hauptförderer positioniert ist und der Schwenkarm den Hauptförderer untergreift, wobei der Schwenkabschieber über einen Exzenter antreibbar ist.

### Stand der Technik

Eine Aussortiervorrichtung gemäß der Gattung ist durch die US-PS 4 298 117 vorbekannt. Diese vorbekannte Konstruktion baut relativ aufwendig. Nachteilig ist auch das relativ abrupte Umlenken der auszusortierenden Stückgüter, was einmal darauf zurückzuführen ist, daß die Schwenkachse etwa außermittig zur Förderrichtung des Hauptförderers innerhalb dessen senkrechter Projektion angeordnet ist. Zum anderen erlaubt diese Konstruktion auch keinen unterschiedlich schnellen Vor- und Rückhub (Vor- und Rücklauf) des Schwenkabschiebers.

### Aufgabe

Der Erfindung liegt die Aufgabe zugrunde, eine Aussortiervorrichtung gemäß der vorausgesetzten Gattung so auszugestalten, daß sich bei hoher Aussortierleistung und schonendem Transport der zu sortierenden Stückgüter dieselben möglichst weich und stoßfrei in die Bewegungsrichtung des Abzugs- oder Querförderers aussortieren lassen, bei einfachem, konstruktivem Aufbau der Vorrichtung.

### Lösung

Die Aufgabe wird durch die in Patentanspruch 1 wiedergegebenen Merkmale gelöst.

### Einige Vorteile

Eine erfindungsgemäße Aussortiervorrichtung ermöglicht bei hohen Aussortierleistungen von z.B. 3600 Einheiten/h bei z.B. einer Fördergeschwindigkeit von 1,25 m/s des Hauptförderers ein schonendes Aussortieren von Stückgütern, z.B. wie Kartons oder Flaschenkästen auf den zugeordneten Abzugs- oder Querförderer. Des weiteren ist eine erfindungsgemäße Aussortiervorrichtung universell einsetzbar an Gurt- und Rollenförderern, und zwar in Verbindung mit einem nur geringen elektrischen Steuerungsaufwand.

Dadurch, daß die Schwenkachse auf der dem Abschiebearm gegenüberliegenden Seite neben dem Hauptförderer, also außerhalb dessen Bewegungsbahn und seitlich an dessen Konstruktion angeordnet ist, ergibt sich wegen des langen Schwenkarms eine im Gegensatz zu der Bauart nach der US-PS 4 298 117 erheblich schonendere, weiche Umlenkung und Aussortierung der Stückgüter in Richtung des Abzugs- und Querförderers, und zwar bei hoher Aussortierleistung und relativ einfacher Konstruktion.

Bei Angriff des Exzenters am Schwenkarm zwischen Drehachse und Abschiebearm erfolgt der Vor- und Rückhub des Schwenkabschiebers bzw. des Abschiebearmes unterschiedlich schnell. So ist der Vorhub, also der Hub, durch den das Aussortieren des betreffenden Stückgutes eingeleitet und vollendet wird, relativ langsamer als der Rückhub, so daß ein relativ weicher Vorlauf und ein schneller Rücklauf, kurze Abstände zwischen den Stückgütern und damit eine hohe Förder- und Aussortierleistung möglich ist.

### Weitere Ausführungsformen

In Patentanspruch 2 ist eine vorteilhafte Ausführungsform beschrieben. Dadurch läßt sich der Schwenkwinkel des Schwenkarmteils vergrößern oder verkleinern. Entsprechend verändert sich auch der Schwenkweg des Schwenkabschiebers.

In Patentanspruch 3 ist eine weitere vorteilhafte Ausführungsform beschrieben. Sie ermöglicht eine Justierung in Förderrichtung (X). Dadurch läßt sich der Zeitpunkt, des Ausschleusevorgangs in Grenzen auf die jeweils vorliegenden Gegebenheiten optimal stufenlos einstellen.

In der Zeichnung ist die Erfindung – teils schematisch – an einem Ausführungsbeispiel veranschaulicht. Es zeigen:

Fig. 1 Eine Förderanlage in ausschnittsweiser Darstellung, wobei sich der Schwenkabschieber in Ausgangsstellung befindet;

Fig. 2 Eine Darstellung entsprechend Fig. 1, und zwar in einer mittleren Schwenkstellung des Schwenkabschiebers;

Fig. 3 Die aus Fig. 2 ersichtliche Anlage, wobei der Schwenkabschieber seine maximale Schwenkstellung erreicht hat;

Fig. 4 Die aus den Figuren 1 bis 3 ersichtliche Anlage, wobei der Schwenkabschieber wieder in seine aus Fig. 1 ersichtliche Lage zurückbewegt worden ist;

Fig. 5 Die Aussortiervorrichtung mit dem Schwenkabschieber in größerem Maßstab und

Fig. 6 eine Seitenansicht auf eine Aussortiervorrichtung teils herausgebrochen dargestellt, teils im Schnitt.

Mit dem Bezugzeichen 1 ist ein als Gurt- oder Rollenförderer ausgebildeter, motorisch angetriebener Hauptförderer bezeichnet, auf dem Stückgut 2, beispielsweise Kartons oder Kästen, in Förderrichtung X transportiert werden.

Dem Hauptförderer 1 ist ein motorisch angetriebener Abzug- oder Querförderer 3 zugeordnet, dessen Förderrichtung Y rechtwinklig zur Förderrichtung X verläuft, aber auch unter einem anderen Winkel erfolgen kann.

Dem Hauptförderer 1 ist im Bereich des Abzugs- oder Querförderers 3 eine Lichtschranke 4 zugeordnet, die einen Reflektor 5 und eine Lichtquelle 6 oder ein vergleichbares Schaltelement aufweist.

Eine Aussortiervorrichtung 7 wird motorisch angesteuert, wenn die Lichtschranke 4 von einem vorbestimmten Stückgut 2 unterbrochen wird. Die Auslösung erfolgt durch die Vorderkante des Stückgutes 2 beim Passieren der Lichtschranke 4.

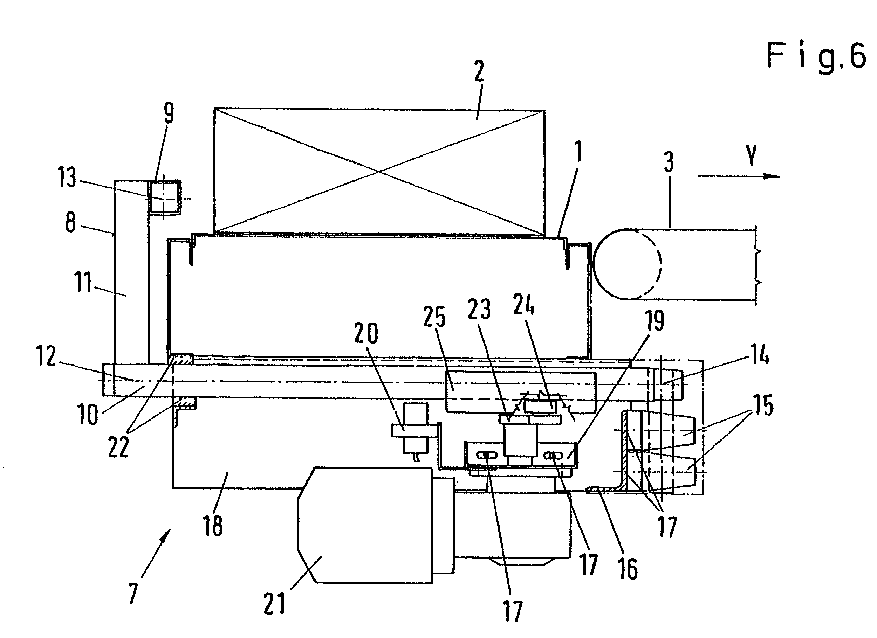

Die Aussortiervorrichtung 7 weist einen Schwenkabschieber 8 auf, der einen Abschiebearm 9 und einen Schwenkarm 10 besitzt, die starr, also einstückig und unbeweglich miteinander verbunden sind. Sie schließt einen spitzen Winkel β mit ihren Längsachsen zueinander ein. Wie die Figur 6 erkennen läßt, sind Abschiebearm 9 und Schwenkarm 10 in unterschiedlichen Ebenen übereinander angeordnet, derart, daß sich Abschiebearm 9 kurz oberhalb des Hauptförderers 1 befindet, also über den Hauptförderer 1 hinwegzustreichen vermag, während Schwenkarm 10 die Konstruktion des Hauptförderers 1 untergreift. Abschiebearm 9 und Schwenkarm 10 sind an einem vertikal verlaufenden Schwenkarm-Verbindungsteil 11 fest angeordnet, beispielsweise durch Schweißen oder Schrauben mit diesem verbunden. Die Längsachse 12 des Schwenkarms 10 und die Längsachse 13 des Abschiebearms 9 verlaufen orthogonal zur Längsachse des Verbindungsteils 11.

Sowohl Abschiebearm 9 und Schwenkarm 10 als auch das Schwenk-Verbindungsteil 11 bestehen bei der dargestellten Ausführungsform aus Profilrohren von rechteckförmigem oder quadratischem Querschnitt (Fig. 6).

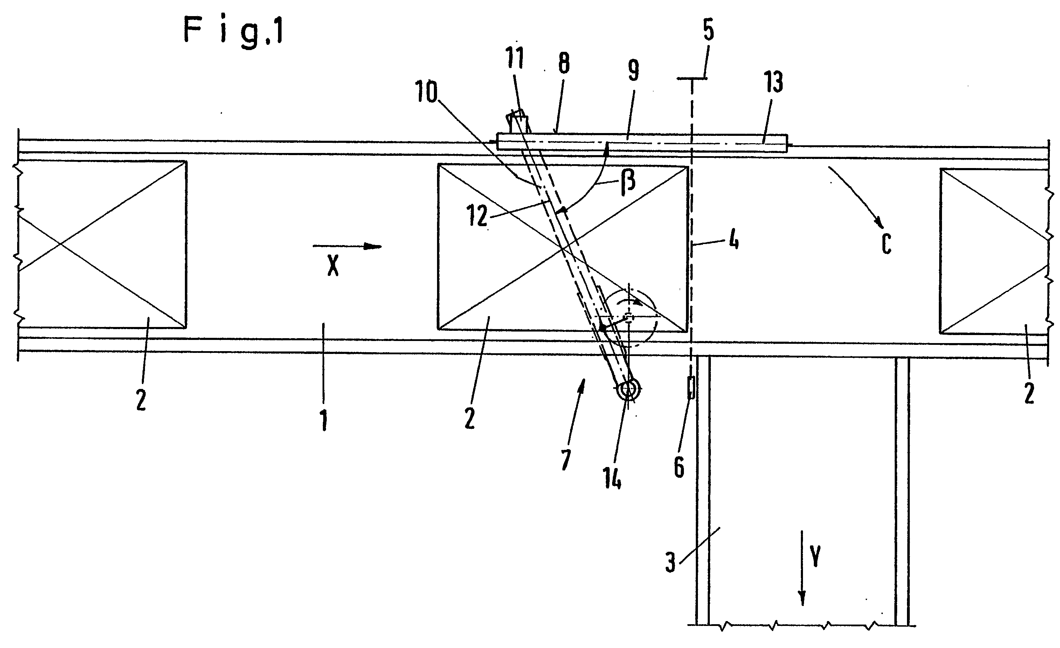

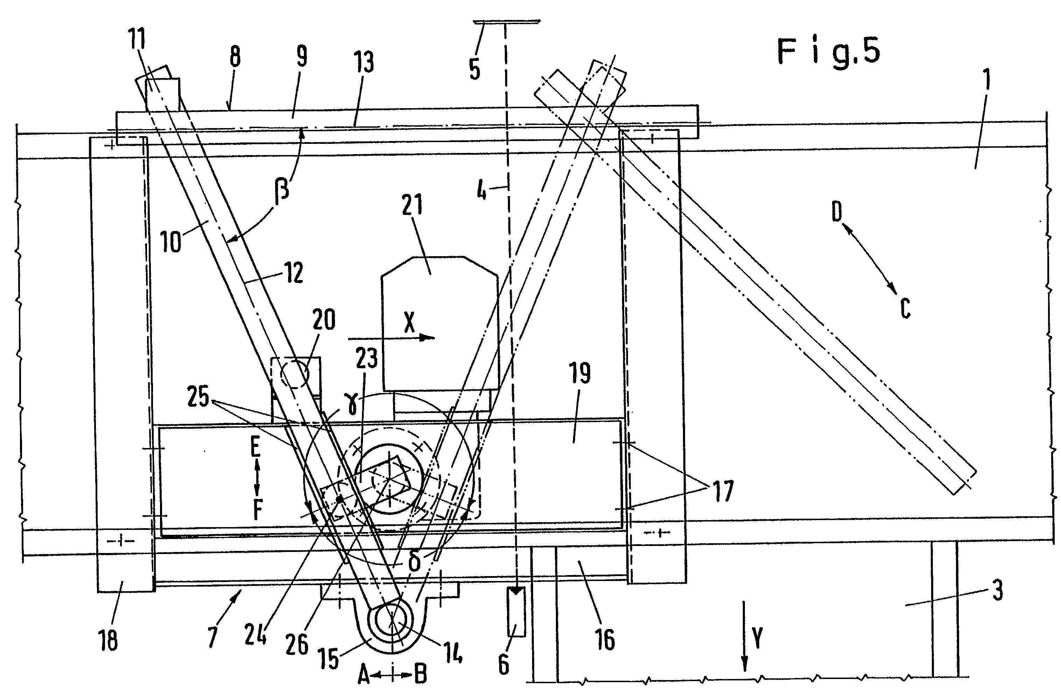

In Ruhestellung (Figuren 1, 4 und 5) verläuft die Längsachse des Abschiebearms 9 annähernd parallel zur Förderrichtung X des Hauptförderers 1, während das Schwenkarm-Verbindungsteil 11 (Fig. 5) außerhalb der senkrechten Projektion des Hauptförderers 1, also neben diesem, zu liegen kommt.

Die Schwenkachse (Drehachse) für den Schwenkabschieber 8 befindet sich bei 14 auf der dem Abschiebearm 9 gegenüberliegenden Seite des Hauptförderers 1. Diese Schwenkachse 14 ist in einem Lager 15 schwenkbeweglich angeordnet, und an der Tragkonstruktion 16 seitlich durch Schrauben lösbar befestigt. Die Schrauben sind in Fig. 5 lediglich durch Mittellinien angedeutet.

Mit 17 ist ein Längsschlitz bezeichnet. Das Lager 15 ist in Richtung A bzw. B (Fig. 5) um ein begrenztes Maß in Förderrichtung X bzw. gegen diese verstellbar und in der jeweils gewünschten Lage auch wiederum arretierbar. Auf diese Weise läßt sich der Angriffspunkt des Abschiebearms 9 am Stückgut 2 einstellen.

Mit dem Bezugzeichen 18 ist ein Rahmen einer Rahmenkonstruktion bezeichnet, während 19 eine Konsole darstellt.

Mit 20 ist ein Initiator bezeichnet, während 21 einen Getriebemotor darstellt und 22 eine Gleitleiste.

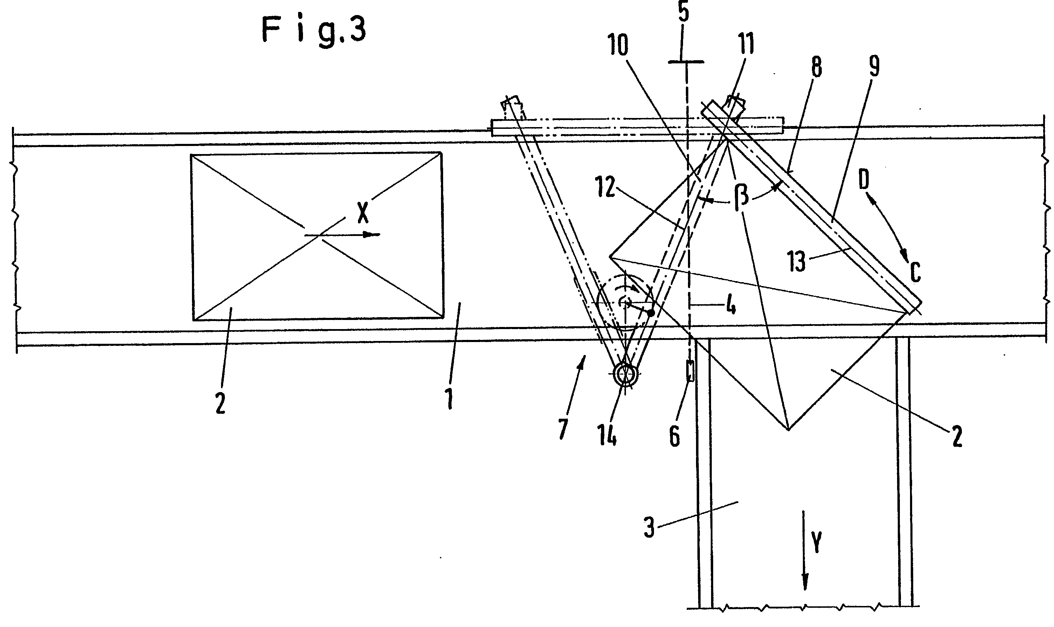

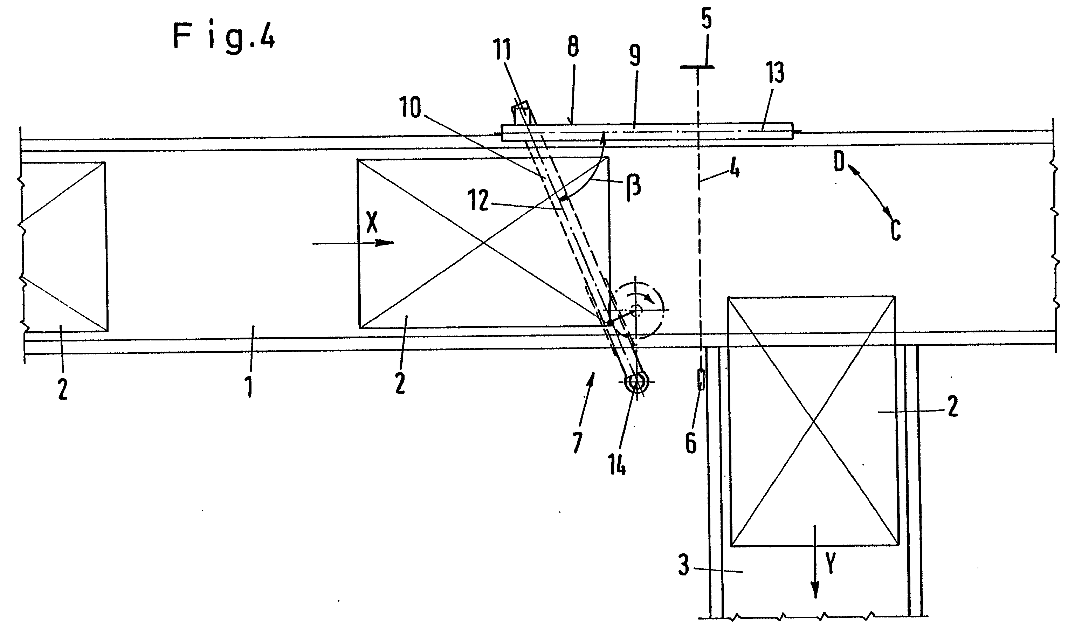

Mit 23 ist ein Exzenter bezeichnet, der durch den Getriebemotor 21 angetrieben wird. Dem Exzenter 23 ist ein Kugellager 24 zugeordnet, das in einer Kulissenführung 25 des Schwenkarms 10, und zwar in Längsrichtung desselben, hin- und hergleiten kann, wenn der Exzenter 23 den Schwenkabschieber 8 um die Drehachse 14 in Richtung C bzw. D schwenkt. Beim Drehen des Exzenters 23 um seinen Mittelpunkt 26 verschiebt sich das Kugellager 24 somit in der Kulissenführung 25 auf und nieder, während gleichzeitig der Abschiebearm 9 in Richtung VC vorschwenkt und in Richtung D nach Erreichen seiner Endstellung (Fig. 3) wieder in seine Ausgangslage (Fig. 4) zurückschwenkt. Da der Winkel γ größer ist als der Winkel α, bewegt sich der Abschiebearm 9 in Richtung C, also beim Abweisen eines Stückgutes 2, relativ langsamer als bei seinem Rückhub in Schwenkrichtung D, der relativ viel schneller geschieht.

Der Mittelpunkt des Exzenters 23 läßt in Richtung E bzw. F durch Verschieben der Konsole 19 in den Längsschlitzen 17 verstellen und in der jeweils gewünschten Lage auch arretieren, dadurch läßt sich der Schwenkweg des Schwenkarms 9 verändern. Erfolgt eine Verstellung in Richtung E, so wird der Schwenkweg kleiner, während eine Verstellung in Richtung F den Schwenkweg vergrößert.

Die Wirkungsweise der Aussortiervorrichtung ist die folgende:

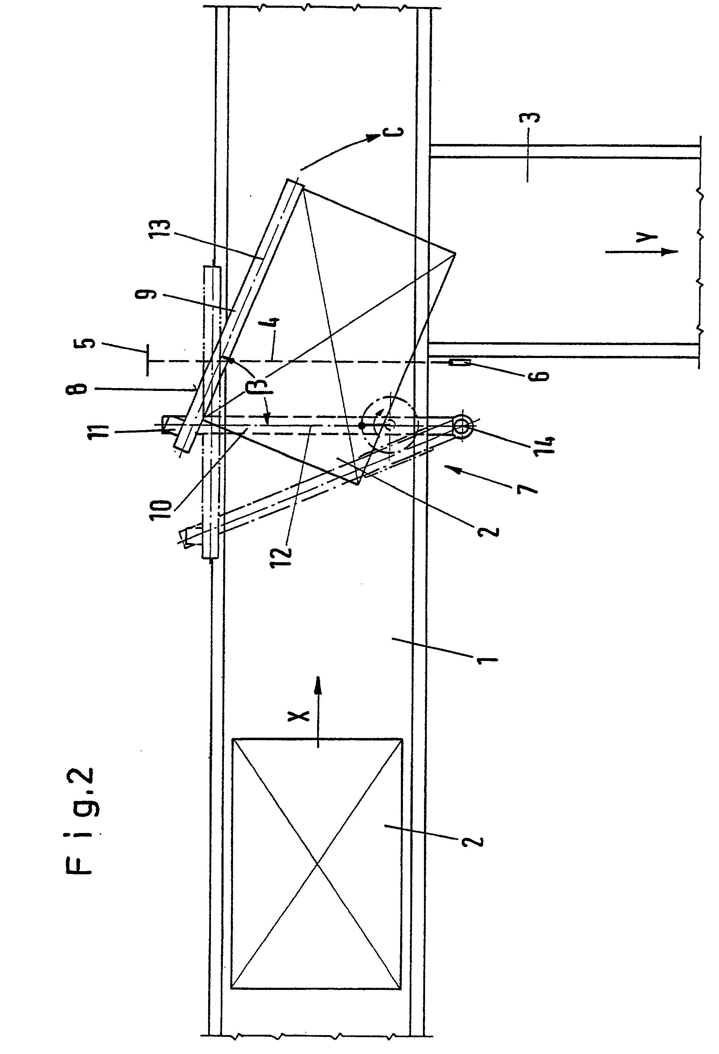

Ein auf dem Hauptförderer 1 ankommendes Stückgut 2 wird beim Passieren der Lichtschranke 4 "identifiziert". Handelt es sich um ein auszuschleusendes Stückgut 2, so wird beim Durchbrechen der Lichtschranke 4 direkt der Antrieb 21 für den Schwenkabschieber 8 eingeschaltet, d.h. dieser in Richtung C geschwenkt, wobei das Stückgut 2 entsprechend Fig. 2 und 3 mitnimmt und es sozusagen annähernd auf der Stelle dreht.

Da die Oberkante des Abzugs- oder Querförderers 2 etwas höher liegt als die Oberkante der Bahn, auf der das Stückgut 2 angeordnet ist, wird das Stückgut 2 auf den Querförderer 3 von dem Abschiebearm 9 gedreht und geschoben. Durch die Relativbewegungen wird die Drehung unterstützt, so daß sich das Stückgut 2 allmählich aus der Lage gemäß Fig. 1 über 2 und 3 dreht, bis sich das Stückgut 2 auf dem Querförderer 3 befindet und dann abtransportiert wird.

Daraufhin schwenkt der Schwenkabschieber 8 in seine aus Fig. 4 ersichtliche Lage sehr schnell wieder zurück und steht dann wieder zum Aussortieren eines anderen Stückgutes 2 zur Verfügung. Der Initiator 20 schaltet den Antrieb 21 für den Schwenkabschieber 8 wieder ab.

Bei einer Fördergeschwindigkeit von 1,24 m/sek. für den Hauptförderer 1 und den Abzugs- oder Querförderer 3 können mit dieser Anlage z.B. 3600 Stückgüter/h aussortiert und über den Abzugs- oder Querförderer 3 abtransportiert werden.

Bei dieser Kombination von Hauptförderer 1 und Schwenkabschieber 8 sowie Querförderer 3 wird der Steuerimpuls somit über die Vorderkante des Fördergutes 2 ausgelöst, so daß auch verschieden lange Stückgüter 2 in beliebiger Folge sicher abgeschoben werden können. Die kompakte Bauweise ermöglicht bei dem vorbeschriebenen Fördergut einen minimalen Mittenabstand verschiedener Querförderer 3 von z.B. 800 mm. Durch die Möglichkeiten von Drehpunkt- und Exzenterverlagerung können Ausgangslage und Hub des Abschiebearms 9 dem Fördergut 2 angepaßt werden. Die Erreichung hoher Abschiebeleistungen bei schonendem Transport sowie der vereinfachte Aufbau des neuen Schwenkabschiebers 8 und seine universellen Einsatzmöglichkeiten an Gurt- und Rollenförderer sind in Verbindung mit dem geringen elektrischen Steuerungsaufwand die herausragenden Merkmale.

Der Abschiebearm 9 liegt annähernd parallel zur Förderrichtung X.

Durch Gestaltung des Abschiebearms ist ein Verklemmen des nachfolgenden Stückgutes nicht mehr möglich.

Der Motor 21 wird eingeschaltet, wenn ein vorbestimmtes Stückgut 2 die Lichtschranke 4 oder ein vergleichbares Schaltelement unterbricht.

Wie ersichtlich ist, läßt sich der Mittelpunkt des Exzenters 23 in Richtung E bzw. F durch Verschieben der Konsole 19 in den Längsschlitzen 17 verstellen, dadurch läßt sich der Schwenkweg des Abschiebearms 9 verändern.

Der Antrieb 21 für den Schwenkabschieber 8 wird nach der Rückhubbewegung mit Belegung des Initiators 20 durch den Schwenkarm 10 wieder abgeschaltet.

## Patentansprüche

1. Aussortiervorrichtung mit wenigstens einem motorisch angetriebenen Hauptförderer (1), auf dem Stückgüter (2) herangefördert werden, wobei dem Hauptförderer (1) mindestens ein motorisch antreibbarer Abzugs- oder Querförderer (3) zugeordnet ist, der das mittels eines motorisch betätigbaren Schwenkabschiebers (8) aussortierte Stückgut (2) wegfördert, wobei der Schwenkabschieber (8) aus einem Schwenkarm (10) und einem Abschiebearm (9) besteht, und diese Arme in Richtung der Schwenkachse (14) des Schwenkabschiebers (8) gesehen in einem Winkel (β) – vorzugsweise einem spitzen Winkel – zueinander ausgerichtet und in Richtung der Schwenkachse (14) beabstandet und in unterschiedlichen Ebenen angeordnet und einstückig starr miteinander verbunden sind, und die Schwenkachse (14) am freien Ende des Schwenkarmes (10) angeordnet ist, wobei in der Ruhestellung der Abschiebearm (9) annähernd parallel zur Förderrichtung des Hauptförderers (1) in Höhe der Stückgüter (2) außerhalb des Transportbereichs der Stückgüter (2) auf dem Hauptförderer (1) positioniert ist und der Schwenkarm (10) den Hauptförderer (1) untergreift, wobei der Schwenkabschieber (8) über einen Exzenter (23) antreibbar ist, dadurch gekennzeichnet, daß die Schwenkachse (14) in der vertikalen Projektion gesehen neben dem Hauptförderer (1) angeordnet ist und der Exzenter am Schwenkarm (10) zwischen Drehachse (14) sowie Abschiebearm (9) angreift und beim Umlauf in einer Führung in Richtung der Längsachse des Schwenkarms (10) hin- und hergleitet.

2. Aussortiervorrichtung nach Anspruch 1, dadurch gekennzeichnet, daß zur Verstellung des Schwenkwinkels bzw. Schwenkwegs des Abschiebearms (9) der Mittelpunkt des Exzenters (23) orthogonal zur Förderrichtung (X) verstellbar und in der jeweils gewünschten Lage arretierbar ist.

3. Aussortiervorrichtung nach Anspruch 1, dadurch gekennzeichnet, daß ein Lager (15) für die Schwenkachse (14) auf der dem Abschiebearm (9) gegenüberliegenden Seite des Hauptförderers (1) an dessen Konstruktion (16) seitlich durch Schrauben lösbar befestigt und parallel zur Förderrichtung (X) um ein begrenztes Maß verstellbar ist.

## Revendications

1. Dispositif de tri comportant au moins un convoyeur principal (1) mû par moteur sur lequel s'approchent convoyés des colis (s), au moins un convoyeur d'enlèvement ou convoyeur transversal (3) mû par moteur étant affecté au convoyeur principal (1), lequel (3) évacue les colis triés (2) au moyen d'un pousseur basculant (8) actionnable par moteur, le pousseur basculant (8) se composant d'un bras basculant (10) et d'un bras pousseur (9), ces bras vus dans le sens de l'axe de basculement (14) du pousseur basculant (8) étant tournés l'un vers l'autre selon un angle (β) – aigu de préférence – et distants l'un de l'autre selon l'axe de basculement (14) et disposés à des niveaux différents et reliés rigidement l'un à l'autre pour ne former qu'une seule pièce, l'axe de basculement (14) étant situé à l'extrémité libre du bras basculant (10), le bras pousseur (9) en position de repos se trouvant presque parallèle au sens de convoyage du convoyeur principal (1) à hauteur des colis (2) en dehors de la zone de déplacement des colis (2) sur le convoyeur principal (1) par-dessous, le pousseur basculant (8) pouvant être entraîné par un excentrique (23), caractérisé en ce que l'axe basculant vu en projection verticale est situé à côté du convoyeur principal (1) et que l'excentrique attaque le bras basculant (10) entre l'axe de rotation (14) et le bras pousseur (9) et décrit un mouvement de va-et-vient dans une glissière dans le sens de l'axe longitudinal du bras basculant (10).

2. Dispositif de tri selon revendication 1, caractérisé en ce que pour déplacer l'angle de basculement et la course de basculement du bras pousseur (9) on peut déplacer le centre de l'excentrique (23) orthogonalement au sens du convoyage (X) et le verrouiller dans la position désirée.

3. Dispositif de tri selon revendication 1, caractérisé en ce qu'un palier (15) d'axe basculant (14) est fixé par vis dévissables sur le côté opposé du convoyeur principal (1) opposé au bras pousseur (9) latéralement contre sa structure (16) et est réglable dans une mesure limitée parallèlement au sens du convoyage (X).

**Claims**

1. Sorting device with at least one motor-driven main conveyor (1) on which piece goods (2) are advanced, whereby the main conveyor (1) is correlated to at least one discharge conveyor, or transverse conveyor (3), which can be driven by a motor, which carries-away the sorted piece goods (2) which have been sorted by means of a pivoted pushing device (8) which can be driven by a motor, whereby the pivoted pushing device (8) consists of a pivoting arm (10) and a pushing arm (9), and these arms, when viewed in the direction of the pivoting axle (14) of the pivoted pushing device (8) are aligned to each other at an angle (β), preferably at an acute angle, and are located at a distance in the direction of the pivoting axle (14) and are arranged in different planes and the pivoting axle (14) is arranged at the free-end of the pivoting arm (10) whereby, in the neutral position, the pushing arm (9) is positioned almost parallel to the conveying direction of the main conveyor (1) at the height of the piece goods (2) extraneously to the transport area of the piece goods (2) extraneously to the transport area of the piece goods (2) on the main conveyor (1) and the pivoting arm (10) grips under the main conveyor (1) whereby the pivoted pushing device (8) is operated by means of an eccentric (23) characterized in that, when the viewed in the vertical projection, the pivoting axle (14) is arranged near to the main conveyor (1) and the eccentric on the pivoting arm (10) engages between the rotary axle (14) as well as the pusher arm (9) and, with one cycle, in a guide, glides to and fro in the direction of the longitudinal axle of the pivoting arm (10).

2. Sorting device in accordance with claim 2, characterized in that, in order to adjust the pivoting angle, or the pivoting path, of the pushing arm (9) the middle point of the eccentric (23) can be adjusted orthogonally to the conveying direction (X) and can be locked in the respectfully-desired position.

3. Sorting device in accordance with claim 1, characterized in that, a bearing (15) for the pivoting axle (14) is secured laterally, by means of screws, and in such a manner that it can be detached, to the structure (16) of the main conveyor (1) which lies opposite to the pushing arm (9) and can be adjusted parallel to the conveying device (X) in a limited amount.

# Fig. 1

EP 0 314 881 B1

Fig.2

Fig.3

EP 0 314 881 B1

# Fig.4

EP 0 314 881 B1

Fig.5

EP 0 314 881 B1

Fig.6

EP 0 314 881 B1